# EUROPEAN PATENT APPLICATION

(11) **EP 3 376 753 A1**
(43) Date of publication of application: **19.09.2018**
(21) Application number: 17171254.0
(22) Date of filing: 16.05.2017
(51) Int. Cl.: H04N 5/232, G03B 37/00

(54) **MULTI-LENS OPTICAL DEVICE**

(30) Priority: 15.03.2017 US 201762471687 P
(71) Applicant: Primax Electronics Ltd, Taipei (TW)
(72) Inventor: PAI, Nien-Hua, Taiwan, ROC Taipei, (TW)
(74) Representative: Haseltine Lake LLP

(57) **Abstract**

A multi-lens optical device is in communication with an electronic device. The multi-lens optical device includes plural optical modules and a storage element. A pixel correction table is stored in the storage element. The plural optical modules shoot the scene to acquire plural images. The plural images and the pixel correction table are transmitted from the multi-lens optical device to the electronic device. The electronic device produces a panoramic image according to the plural images and the pixel correction table. The multi-lens optical device is responsible for the task of capturing the local images and the simple transmitting task. The image processing task is performed by the electronic device. Consequently, the cost of the multi-lens optical device is reduced.

## Description

### FIELD OF THE INVENTION

The present invention relates to an optical device, and more particularly to an optical device with the function of capturing panoramic images.

### BACKGROUND OF THE INVENTION

With development of electronic industries and advance of industrial technologies, various electronic devices are designed toward small size, light weightiness and easy portability. Consequently, these electronic devices can be applied to mobile business, entertainment or leisure purposes whenever or wherever the users are. For example, various image pickup devices are widely used in many kinds of fields such as smart phones, tablet computers, wearable electronic devices or any other appropriate portable electronic devices. Since the electronic devices are small and portable, users can take the electronic devices to capture images and store the images according to the users' requirements.

Recently, a portable electronic device with the function of capturing panoramic images has been introduced into the market. For example, a RICOH panoramic optical device has the function of capturing panoramic images. The panoramic optical device has a small size and is easily carried. A front camera module and a rear camera module with the same specification are respectively installed on a front surface and a rear surface of the panoramic optical device. The front camera module is used for capturing a front image in a range between 180 and 200 degrees. The rear camera module is used for capturing a rear image in a range between 180 and 200 degrees. After the front image and the rear image are captured, the front image and the rear image are combined as a 360-degree panoramic image by an image processing program of the panoramic optical device.

Nowadays, some kinds of portable electronic devices such as slim-type mobile phone also have the functions of capturing panoramic images. The smart phone comprises a front camera module and a rear camera module. However, the specifications of the front camera module and the rear camera module are different, and the field of view (FOV) of the front camera module and the field of view (FOV) of rear camera module are smaller than 180 degrees. In other words, the smart phone cannot adopt the operating principle of the RICOH panoramic optical device to capture the panoramic images. The smart phone is only able to continuously capture images by using the rear camera module while the smart phone is held by the user's hands and rotated along a horizontal direction. After plural local images are captured, these local images are combined as a complete panoramic image by the image processing program of the panoramic optical device. However, since it is difficult to rotate the mobile phone along the horizontal direction at the constant speed, the local images of the panoramic image usually have different widths.

Regardless of which panoramic optical device is adopted, it is necessary to install the image processing program in the panoramic optical device. After the plural local images are corrected by the image processing program, these local images are combined as the complete panoramic image. Generally, for increasing the combination quality of the panoramic image, the precision of performing the correcting operation and the combining operation by the image processing program should be as high as possible. That is, the image processing program used in the panoramic optical device is a highly-technical program. However, the highly-technical program increases the fabricating cost of the panoramic optical device.

Therefore, there is a need of providing a cost-effective panoramic optical device.

### SUMMARY OF THE INVENTION

An object of the present invention provides a cost-effective multi-lens optical device with the function of capturing panoramic images.

In accordance with an aspect of the present invention, there is provided a multi-lens optical device. The multi-lens optical device is in communication with an electronic device. The multi-lens optical device includes a main body, a first optical module, a second optical module, a storage element and a controlling unit. The first optical module is located at a first end of the main body. The first optical module shoots a target object and acquires a first image. The second optical module is located at a second end of the main body. The second optical module acquires a second image. The storage element is disposed within the main body. A pixel correction table is stored in the storage element. The controlling unit is disposed within the main body and connected with the storage element. The first image, the second image and the pixel correction table are transmitted from the multi-lens optical device under control of the controlling unit. The electronic device produces a panoramic image according to the first image, the second image and the pixel correction table.

From the above descriptions, the multi-lens optical device of the present invention is only equipped with plural optical modules, the storage element and the controlling unit. Moreover, the pixel correction table is stored in the storage element. The multi-lens optical device is responsible for the task of capturing the local images and the simple transmitting task. Especially, the strenuous image processing task is performed by the image processing module of the electronic device. Generally, the mobile phone or the comparable electronic device carried by the user can provide sufficient computing capability to the image processing module. The multi-lens optical device of the present invention has the function capturing panoramic image. Moreover, the multi-lens optical device of the present invention is cost-effective. Consequently, the drawbacks of the conventional technologies can be effectively overcome.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic functional block diagram illustrating the relationship between a multi-lens optical device of a first embodiment and an electronic device;
FIG 2 is a schematic side view illustrating the multi-lens optical device according to the first embodiment of the present invention;
FIG. 3 schematically illustrates the scenario of shooting an under-test object from different positions by the multi-lens optical device according to the first embodiment of the present invention;
FIG. 4 schematically illustrates the first image and the second image that are captured by the multi-lens optical device according to the first embodiment of the present invention;
FIG. 5 schematically illustrates the first corrected image and the second corrected image that are generated by the electronic device in communication with the multi-lens optical device according to the first embodiment of the present invention;
FIG. 6 schematically illustrates the panoramic image that is produced by the electronic device in communication with the multi-lens optical device according to the first embodiment of the present invention; and
FIG. 7 is a schematic functional block diagram illustrating the relationship between a multi-lens optical device of a second embodiment and an electronic device.

### DETAILED DESCRIPTION OF THE PREFERRED EMBODIMENT

For overcoming the drawbacks of the conventional technologies, the present invention provides a multi-lens optical device. First of all, the structure of the multi-lens optical device will be illustrated as follows.

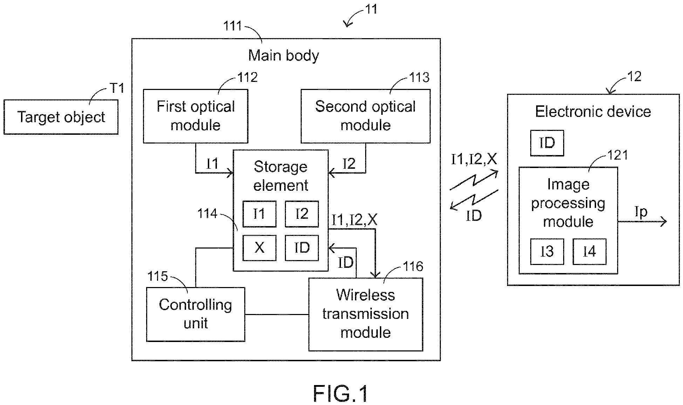

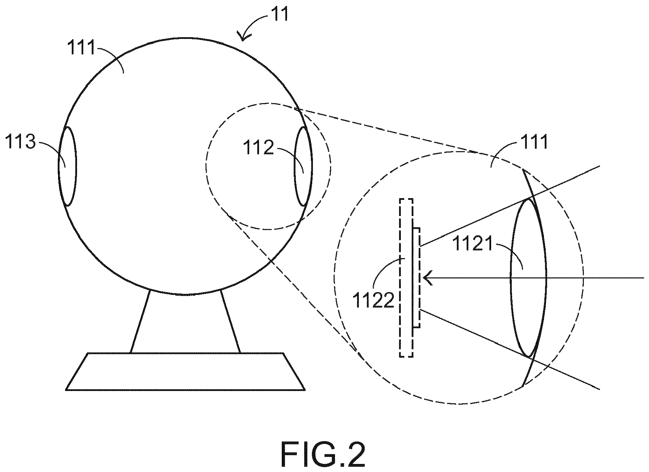

Please refer to FIGS. 1 and 2. FIG. 1 is a schematic functional block diagram illustrating the relationship between a multi-lens optical device of a first embodiment and an electronic device. FIG. 2 is a schematic side view illustrating the multi-lens optical device according to the first embodiment of the present invention. In FIG. 1, the multi-lens optical device 11 and the electronic device 12 are shown. The multi-lens optical device 11 is in wireless connection with the electronic device 12. In an embodiment, the multi-lens optical device 11 comprises a main body 111, a first optical module 112, a second optical module 113, a storage element 114, a controlling unit 115 and a wireless transmission module 116. The first optical module 112 is located at a first end of the main body 111. The first optical module 112 is used for shooting a target object T1 and acquiring a first image I1. Similarly, the second optical module 113 is located at a second end of the main body 111. The second optical module 113 is used for acquiring a second image I2. The storage element 114 is disposed within the main body 111. Moreover, the storage element 114 is connected with the first optical module 112, the second optical module 113, the controlling unit 115 and the wireless transmission module 116. The first image I1, the second image I2 and a pixel correction table X are stored in the storage element 114. The pixel correction table X is previously stored in the storage element 114 according to the characteristics of the multi-lens optical device 11. In an embodiment, the storage element 114 is a memory or any other appropriate storage device.

The controlling unit 115 is disposed within the main body 111 and connected with the storage element 114 and the wireless transmission module 116. The first image I1, the second image I2 and the pixel correction table X are transmitted from the multi-lens optical device 11 to the electronic device 12 under control of the controlling unit 115. The wireless transmission module 116 is connected with the storage element 114 and the controlling unit 115. When the wireless transmission module 116 is connected with the electronic device 12 in a wireless manner, the wireless connection between the multi-lens optical device 11 and the electronic device 12 is established. In an embodiment, the controlling unit 115 is a microprocessor or a chip, and the wireless transmission module 116 is a Wi-Fi transmission module.

Moreover, the electronic device 12 comprises an image processing module 121. After the first image I1, the second image I2 and the pixel correction table X are received by the electronic device 12, the first image I1 and the second image I2 are corrected by the image processing module 121. Consequently, a first corrected image I3 and a second corrected image I4 are generated. After the first corrected image I3 and the second corrected image I4 are combined together by the image processing module 121, a panoramic image Ip is produced. In an embodiment, the electronic device 12 is a personal computer, a smart phone or a tablet computer, and the image processing module 121 is an image processing program that is installed in the electronic device 12.

Please refer to FIG. 2. The first optical module 112 comprises a first optical lens 1121 and a first optical sensor 1122. The first optical lens 1121 is fixed on the main body 111 and partially exposed outside the main body 111. The ambient light beam can be introduced into the first optical module 112 through the first optical lens 1121. The first optical sensor 1122 is disposed within the main body 111 and located beside the first optical lens 1121. After the ambient light beam passing through the first optical lens 1121 is received by the first optical sensor 1122, the first image I1 is obtained. The structure of the second optical module 113 is similar to that of the first optical module 112, and is not redundantly described herein. In an embodiment, the first optical lens 1121 and the first optical sensor 1122 are assembled with each other through an active alignment process.

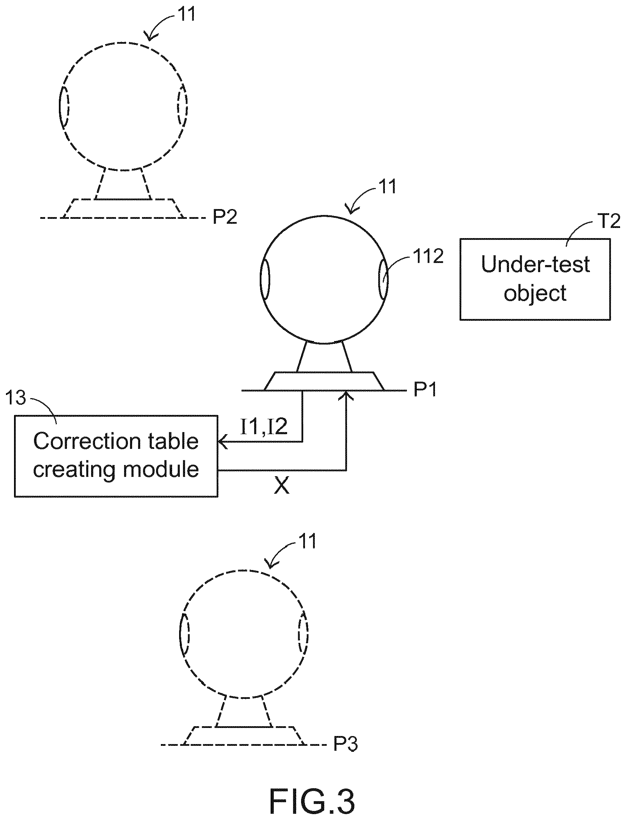

A process of creating the pixel correction table X will be described as follows. Please refer to FIGS. 1 and 3. FIG. 3 schematically illustrates the scenario of shooting an under-test object from different positions by the multi-lens optical device according to the first embodiment of the present invention. After the multi-lens optical device 11 is fabricated, the manufacturer will test the multi-lens optical device 11. For example, the multi-lens optical device 11 is sequentially placed at plural positions P1, P2 and P3. When the multi-lens optical device 11 is placed at the plural positions P1, P2 and P3, the first optical module 112 is controlled to shoot an under-test object T2 and the second optical module 113 is controlled to shoot the scene. Consequently, plural first test images I5 are acquired by the first optical module 112, and plural second test images I6 are acquired by the second optical module 113. In a preferred embodiment, when the multi-lens optical device 11 is placed at the plural positions P1, P2 and P3, the first optical module 112 and the second optical module 113 are respectively controlled to shoot the under-test object T2 and the scene from different viewing angles. Consequently, plural first test images I5 and plural second test images I6 corresponding to different distances and different viewing angles are acquired.

After the plural first test images I5 and the plural second test images I6 are acquired, the multi-lens optical device 11 is connected with a correction table creating module 13. Then, the plural first test images I5 and plural second test images I6 are transmitted from the multi-lens optical device 11 to the correction table creating module 13. The correction table creating module 13 is installed in another electronic device (not shown). Then, the correction table creating module 13 compares the plural first test images I5 and plural second test images I6. Consequently, the image deformation values generated when the first optical module 112 and the second optical module 113 capture images and the production error values of the first optical module 112 and the second optical module 113 are analyzed by the correction table creating module 13. Moreover, the spatial relative position value between the first optical module 112 and the second optical module 113 is calculated by the correction table creating module 13 according to the plural first test images I5 and the plural second test images I6. According to the above values, the correction table creating module 13 generates the pixel correction table X for the multi-lens optical device 11. Moreover, the pixel correction table X is stored in the storage element 114 of the multi-lens optical device 11.

The following two aspects should be specially described. Firstly, the pixel correction table X is determined according to the image deformation values, the production error values and the spatial relative position value between the first optical module 112 and the second optical module 113. In other words, the pixel correction tables for different multi-lens optical devices are different. Secondly, the multi-lens optical device 11 of this embodiment comprises the first optical module 112 and the second optical module 113. It is noted that the number of the optical modules of the multi-lens optical device is not restricted. That is, the number of the optical modules of the multi-lens optical device may be increased or decreased according to the practical requirements. As the number of the optical modules is increased, the demand on the field of view (FOV) of each optical module is reduced. For example, in case that the multi-lens optical device comprises four optical modules, the FOV of each optical module is only in the range between 90 and 100 degrees.

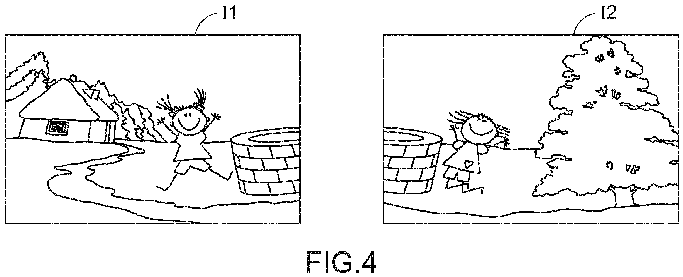

A method of producing the panoramic image by the multi-lens optical device 11 will be described as follows. Please refer to FIG. 1 again. For capturing the panoramic image containing the target object T1, the multi-lens optical device 11 is used to shoot the target object T1. That is, the first optical module 112 shoots the target object T1 to capture the first image I1, and the second optical module 113 at the second end of the main body 111 shoots the scene to capture the second image I2. The first image I1 and the second image I2 captured by the multi-lens optical device 11 are shown in FIG 4. After the first image I1 and the second image I2 are acquired, the wireless transmission module 116 is in wireless connection with the electronic device 12 under control of the controlling unit 115. At the same time, the controlling unit 115 judges whether the multi-lens optical device 11 is in communication with the electronic device 12 for the first time. According to the result of judging whether an identification information ID is stored in the electronic device 12, the controlling unit 115 judges whether the multi-lens optical device 11 is in communication with the electronic device 12 for the first time. If the controlling unit 115 judges that the multi-lens optical device 11 is in communication with the electronic device 12 for the first time, the first image I1, the second image I2 and the pixel correction table X are transmitted from the wireless transmission module 116 to the electronic device 12 under control of the controlling unit 115. Whereas, if the controlling unit 115 judges that the multi-lens optical device 11 is in communication with the electronic device 12 not for the first time, the controlling unit 115 further judges whether the pixel correction table X is stored in the electronic device 12.

If the controlling unit 115 judges that the pixel correction table X is not stored in the electronic device 12, the first image I1, the second image I2 and the pixel correction table X are transmitted from the wireless transmission module 116 to the electronic device 12 under control of the controlling unit 115. Whereas, if the controlling unit 115 judges that the pixel correction table X has been stored in the electronic device 12, only the first image I1 and the second image I2 are transmitted from the wireless transmission module 116 to the electronic device 12 under control of the controlling unit 115. Since the multi-lens optical device 11 is in communication with the electronic device 12 through the wireless transmission module 116, the controlling unit 115 acquires the associated information and performs the above judgment. The process of implementing the communication between the wireless devices is well known to those skilled in the art, and is not redundantly described herein.

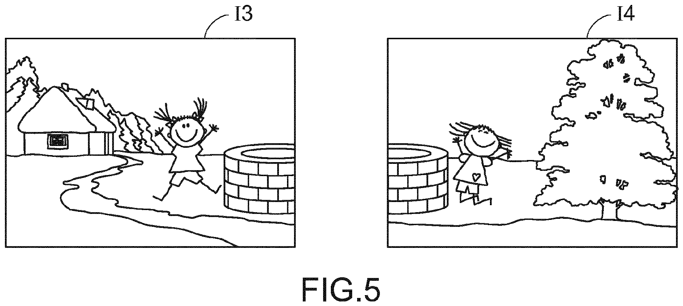

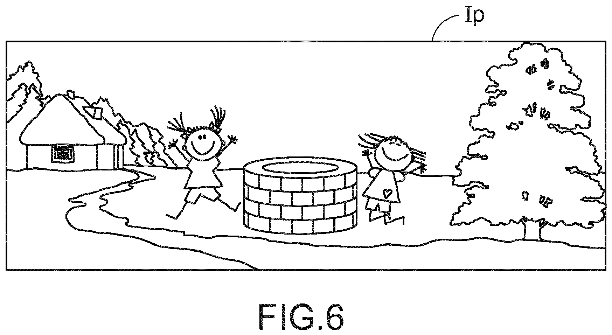

After the first image I1, the second image I2 and the pixel correction table X are received by the electronic device 12, the image processing module 121 performs a barrel distortion correction and/or a perspective deformation correction on the first image I1 and the second image I2 according to a correction parameter X1 of the pixel correction table X. Consequently, the first corrected image I3 and the second corrected image I4 are generated. The first corrected image I3 and the second corrected image I4 are shown in FIG. 5. Then, the image processing module 121 performs a feature searching operation and a feature matching operation on the first corrected image I3 and the second corrected image I4. Consequently, the pixels corresponding to the same local images are searched from the first corrected image I3 and the second corrected image I4. Then, the first corrected image I3 and the second corrected image I4 are combined together according to the pixels. Consequently, the panoramic image Ip is produced. An example of the panoramic image Ip is shown in FIG. 6.

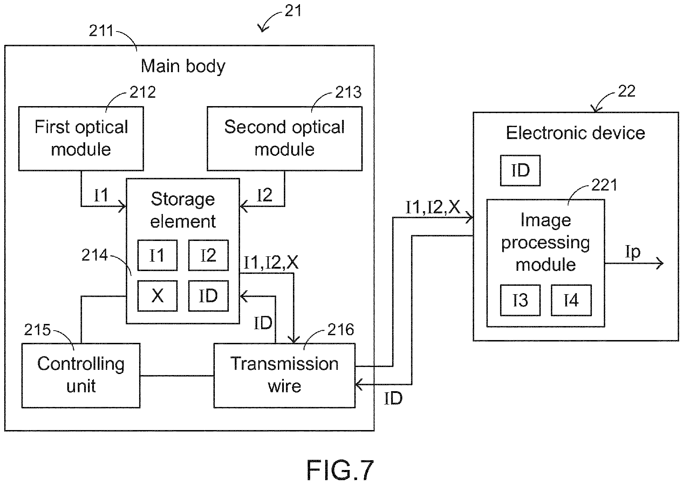

The present invention further provides a second embodiment, which is distinguished from the first embodiment. FIG. 7 is a schematic functional block diagram illustrating the relationship between a multi-lens optical device of a second embodiment and an electronic device. In FIG. 7, the multi-lens optical device 21 and the electronic device 22 are shown. The multi-lens optical device 21 is in wireless connection with the electronic device 22. In an embodiment, the multi-lens optical device 21 comprises a main body 211, a first optical module 212, a second optical module 213, a storage element 214, a controlling unit 215 and a transmission wire 216. The electronic device 22 comprises an image processing module 221. The structure and function of the multi-lens optical device 21 that are similar to those of the first embodiment are not redundantly described herein. In comparison with the first embodiment, the multi-lens optical device 21 of this embodiment is in communication with the electronic device 22 through the transmission wire 216 in a wired manner. The operations of the multi-lens optical device 21 are similar to those of the first embodiment, and are not redundantly described herein.

From the above descriptions, the multi-lens optical device of the present invention is only equipped with the plural optical modules, the storage element and the controlling unit. Moreover, the pixel correction table is stored in the storage element. The multi-lens optical device is responsible for the task of capturing the local images and the simple transmitting task. Especially, the strenuous image processing task is performed by the image processing module of the electronic device. Generally, the mobile phone or the comparable electronic device carried by the user can provide sufficient computing capability to the image processing module. The multi-lens optical device of the present invention has the function capturing panoramic image. Moreover, the multi-lens optical device of the present invention is cost-effective. Consequently, the drawbacks of the conventional technologies can be effectively overcome.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all modifications and similar structures.

## Claims

1. A multi-lens optical device in communication with an electronic device, the multi-lens optical device comprising:
a main body;
a first optical module located at a first end of the main body, wherein the first optical module shoots a target object and acquires a first image;
a second optical module located at a second end of the main body, wherein the second optical module acquires a second image;
a storage element disposed within the main body, wherein a pixel correction table is stored in the storage element; and
a controlling unit disposed within the main body and connected with the storage element, wherein the first image, the second image and the pixel correction table are transmitted from the multi-lens optical device under control of the controlling unit, and the electronic device produces a panoramic image according to the first image, the second image and the pixel correction table.

2. The multi-lens optical device according to claim 1, wherein if the controlling unit judges that the multi-lens optical device is in communication with the electronic device for the first time, the controlling unit records an identification information of the electronic device and controls the multi-lens optical device to transmit the first image, the second image and the pixel correction table to the electronic device, wherein if the controlling unit judges that the multi-lens optical device is in communication with the electronic device not for the first time, the controlling unit further judges whether the pixel correction table is stored in the electronic device.

3. The multi-lens optical device according to claim 2, wherein if the controlling unit judges that the pixel correction table is not stored in the electronic device, the controlling unit controls the multi-lens optical device to transmit the first image, the second image and the pixel correction table to the electronic device, wherein if the controlling unit judges that the pixel correction table has been stored in the electronic device, only the first image and the second image are transmitted from the multi-lens optical device to the electronic device under control of the controlling unit.

4. The multi-lens optical device according to claim 1, wherein the multi-lens optical device further comprises a wireless transmission module, and the wireless transmission module is connected with the storage element and the controlling unit, wherein when the wireless transmission module is connected with the electronic device in a wireless manner, a wireless connection between the multi-lens optical device and the electronic device is established.

5. The multi-lens optical device according to claim 1, wherein the multi-lens optical device further comprises a transmission wire, and the transmission wire is connected with the storage element and the controlling unit, wherein when the transmission wire is connected with the electronic device in a wired manner, the multi-lens optical device and the electronic device are in communication with each other.

6. The multi-lens optical device according to claim 1, wherein the pixel correction table is generated by a correction table creating module after plural first test images and plural second test images are compared and analyzed, wherein the plural first test images are obtained when an under-test object is shot by the first optical module at plural positions, and the plural second test images are obtained when a scene is shot by the second optical module at the plural positions.

7. The multi-lens optical device according to claim 1, wherein the first optical module comprises:
a first optical lens fixed on the main body and partially exposed outside the main body, wherein an ambient light beam passes through the first optical lens; and
a first optical sensor disposed within the main body and located beside the first optical lens, wherein after the ambient light beam passing through the first optical lens is received by the first optical sensor, the first image is obtained.

8. The multi-lens optical device according to claim 7, wherein the first optical lens and the first optical sensor are assembled with each other through an active alignment process.

9. The multi-lens optical device according to claim 1, wherein the electronic device comprises an image processing module, wherein after the first image and the second image are corrected by the image processing module according to the first image, the second image and the pixel correction table, a first corrected image and a second corrected image are generated, wherein after the first corrected image and the second corrected image are combined together by the image processing module, the panoramic image is produced.

10. The multi-lens optical device according to claim 9, wherein after the image processing module performs a barrel distortion correction and/or a perspective deformation correction on the first image and the second image according to a correction parameter of the pixel correction table, the first corrected image and the second corrected image are generated, wherein after the image processing module performs a feature searching operation and a feature matching operation on the first corrected image and the second corrected image, the first corrected image and the second corrected image are combined together, so that the panoramic image is produced.
